# EUROPÄISCHE PATENTSCHRIFT

(11) **EP 0 490 036 B1**
(45) Veröffentlichungstag und Bekanntmachung des Hinweises auf die Patenterteilung: **22.02.1995**
(21) Anmeldenummer: 91116904.3
(22) Anmeldetag: 04.10.1991
(51) Int. Cl.: F16F 13/00

(54) **Hydraulisch dämpfende Gummibuchse**
Hydrautically damped rubber bushing
Manchon élastique amorti hydrauliquement

(30) Priorität: 08.12.1990 DE 4039228
(43) Veröffentlichungstag der Anmeldung: 17.06.1992
(73) Patentinhaber: Firma Carl Freudenberg, 69469 Weinheim (DE)
(72) Erfinder: Hamaekers, Arno, W-6946 Gorxheimertal (DE); Simuttis, Arnold, Dr., W-6550 Bad Kreuznach (DE)

(56) Entgegenhaltungen:
- EP-A- 0 460 278
- DE-A- 3 724 432
- PATENT ABSTRACTS OF JAPAN vol. 9, no. 268 (M-424)(1991) 25. Oktober 1985 & JP-A-60 113 834 (TOYOTA JIDOSHA) 20. Juni 1985

## Beschreibung

Die Erfindung betrifft eine hydraulisch dämpfende Gummibuchse gemäß Oberbegriff des Anspruchs 1.

Eine solche Gummibuchse ist aus der DE-OS 37 24 432 bekannt und hat den Vorteil, daß unter Last aufgrund der gestaucht eingebauten Stege keine nennenswerten Zugspannungen innerhalb des Federkörpers auftreten. Ferner ist eine Abstimmung der Dämpfungseigenschaften durch Variation der geometrischen Abmessungen der jeweils stirnseitig an der Gummibuchse vorhandenen Ringkanäle möglich. So eignet sich zum Beispiel ein langer, enger Kanal zur Dämpfung niedrigfrequenter, zwei parallel wirkende, getrennte Kanäle zur Dämpfung hochfrequenter Schwingungen.

Dabei ist allerdings zu beachten, daß die geometrische Form der flüssigkeitsführenden Kanäle und damit die Dämpfungscharakteristik der montierten Gummibuchse während des Betriebs nicht mehr veränderbar ist. Mit verschiedenen Ausführungen der bekannten Gummibuchse können zwar Schwingungen in jeweils verschiedenen Frequenzbereichen gedämpft werden, eine breitbandige Dämpfung, d.h. eine Dämpfung über einen breiten Frequenzbereich, ist mit diesen Buchsen allerdings nicht möglich. Die Herstellung einer breiten Palette unterschiedlicher Gummilager der bekannten Art ist aufwendig und in wirtschaftlicher Hinsicht wenig befriedigend. Nachteilig darüber hinaus ist, daß beispielsweise bei extrem weich gelagerten Motoren mit niedriger Resonanzfrequenz im Bereich von 5 Hz die erreichbare Dämpfungsrate durch die auf das Umfangsmaß der Buchse begrenzte Länge der Ringkanäle stark eingeschränkt ist.

Der Erfindung liegt die Aufgabe zugrunde, eine hydraulisch dämpfende Gummibuchse der eingangs genannten Art derart weiterzuentwickeln, daß eine hochgradige, breitbandige Dämpfung niedriger Frequenzen, ungefähr im Bereich von 5 Hz beginnend, erzielt werden kann. Insbesondere sollen Schwingungen sehr weich gelagerter Motoren bis in den Frequenzbereich der Achs-Eigenresonanzen gut gedämpft werden.

Diese Aufgabe wird erfindungsgemäß mit den kennzeichnenden Merkmalen von Anspruch 1 gelöst. Auf vorteilhafte Ausgestaltung nehmen die Ansprüche 2 bis 8 Bezug.

Die erfindungsgemäße hydraulisch dämpfende Gummibuchse weist sämtliche Merkmale des Anspruchs 1 auf.

Hierbei ist von Vorteil, daß die beiden jeweils stirnseitig am Umfang der Gummibuchse verlaufenden Ringkanäle über den Axialkanal flüssigkeitsleitend in Reihe geschaltet sind, wodurch sich eine sehr lange Gesamtkanallänge ergibt. Außerdem kann ein relativ großer Kanalquerschnitt zur Dämpfung verwendet werden. Große Dämpfungsflüssigkeitsmassen bewirken eine hochgradige Dämpfung niedriger Frequenzen.

An einer der Stirnseiten der hydraulisch dämpfenden Gummibuchse, in der Trennwand des radial verlaufenden Teilabschnittes des Ringkanals zur benachbarten Arbeitskammer, befindet sich ein in Richtung dieser Arbeitskammer zu öffnendes Ventil. Außer diesem einseitig wirkenden Ventil besteht auch die Möglichkeit, daß sich an einer der Stirnseiten der hydraulisch dämpfenden Gummibuchse, innerhalb des radial verlaufenden Ringkanals, ein in beide Durchflußrichtungen zu öffnendes Ventil befindet. Das Ventil kann durch eine Aussparung der Mittelarmierung im Bereich der Kanalbegrenzung realisiert werden, so daß der Innendruck im Kanal, der höher als der Kammerdruck der flüssigkeitsaufnehmenden Kammer ist, die elastisch gestaltete Kanalwand verformt und einen Volumenstrom in Bewegung setzt. Dieser Volumenstrom beeinflußt durch die Größe der Aussparung die Dämpfung der Schwingung über einen bestimmten Frequenzbereich. Bedingt durch das Ventil ist der Bereich der Frequenzen, die mit dieser Buchse gedämpft werden können, schon vergleichsweise breitbandig.

An beiden Stirnseiten der Gummibuchse, innerhalb jedes Ringkanals, kann sich je ein in beide Durchflußrichtungen zu öffnendes Ventil befinden. Durch das zweite Ventil wird eine höhere Dämpfung über ein breiteres Frequenzband erreicht. Dies trifft auch auf die folgende Anordnung der Ventile in der Gummibuchse zu: An einer Stirnseite der Buchse sowohl in der Trennwand des radial verlaufenden Teilabschnittes des Ringkanals zur benachbarten Arbeitskammer befindet sich ein in Richtung der Arbeitskammer zu öffnendes Ventil. Auch innerhalb des radial verlaufenden Ringkanals ist ein in beide Durchflußrichtungen zu öffnendes Ventil angeordnet. Mit Hilfe des zweiten Ventils, das auf der gleichen Stirnseite wie das erste angeordnet ist, kann ein Kurzschluß über einen kurzen Weg geschaltet werden, wodurch auch höherfrequente Schwingungen gedämpft werden können. Die maximale Dämpfung wird dann geringfügig kleiner, zugunsten eines wesentlich breiteren Dämpfungsbandes.

Beide Stirnseiten der hydraulisch dämpfenden Gummibuchse können die gleiche Art von Ventilen in gleicher Zahl und Anordnung aufweisen. Sind als Ventile jeweils einseitig in Strömungsrichtung wirkende Exemplare vorgesehen, können hinsichtlich Zug- und Druckstufe der hydraulisch dämpfenden Gummibuchse unterschiedliche Dämpfungscharakteristika realisiert werden. Dieses Verhalten kann verstärkt werden, indem diese Ventilanordnung auch auf der gegenüberliegenden Stirnseite erfolgt.

Die mit den Arbeitskammern verbundenen Ringkanäle sind durch jeweils zwei parallel in Umfangsrichtung der Buchse verlaufende, kanalartige Abschnitte gebildet, die miteinander durch jeweils um 180° umlenkende Flüssigkeitskrümmer verbunden sind, wobei die parallelen, kanalartigen Abschnitte voneinander durch im wesentlichen in Umfangsrichtung verlaufende Fortsätze des Gummifederkörpers getrennt sind. Durch diese Ausgestaltung sind sehr lange Kanäle mit guten Dämpfungseigenschaften für niedrigfrequente Schwingungen zu erreichen. Auch eine Verlängerung der Buchse in axialer Richtung ist denkbar, wodurch die "gefalteten" Kanäle fast beliebig verlängert werden können.

Die parallelen, kanalartigen Abschnitte können im Bereich der beiden Arbeitskammern je ein Ventil aufweisen, welches jeweils den Flüssigkeitsdurchtritt aus beiden Abschnitten zugleich in eine der Kammern regelt. Die Ventile, die zur Wirkungsverbesserung der Dämpfung zusätzlich in der gegenüberliegenden Stirnseite vorgesehen sein können, bewirken eine gute Dämpfung über ein variables, breites Frequenzband.

Das Ventil kann in allen bisher beschriebenen Anwendungsbeispielen selbstschaltend ausgelegt oder durch ein Hilfsmittel von außen betätigbar sein.
Ein selbstschaltendes Ventil kann aus einem Schlitz im Federkörper bestehen, der druckabhängig einen variablen Öffnungsquerschnitt freigibt und so die Dämpfungseigenschaften der hydraulisch dämpfenden Gummibuchse beeinflußt. Als Hilfsmittel können beispielsweise von außen durch das Gehäuse eintauchende Stifte oder Scheiben vorgesehen sein, die den Durchfluß durch die Öffnung vorzugsweise stufenlos einstellen. Denkbar sind auch von außen betätigbare Drehschieber. Ist das Hilfsmittel mit einem Antrieb beispielsweise mit einem elektrisch ansteuerbaren Servoantrieb versehen, der signalleitend mit einem Kennfeld verbunden sein kann, können die Dämpfungseigenschaften der Buchse an die jeweilige Fahrsituation des Fahrzeuges angepaßt werden.

Mehrere Ausführungsbeispiele der Erfindung sind in den Zeichnungen dargestellt und werden im folgenden näher beschrieben:

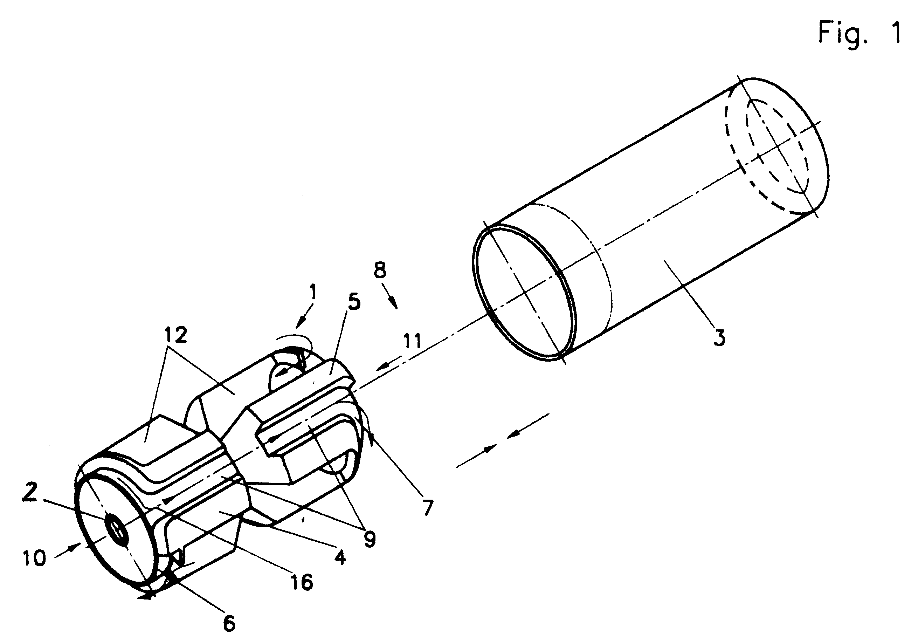

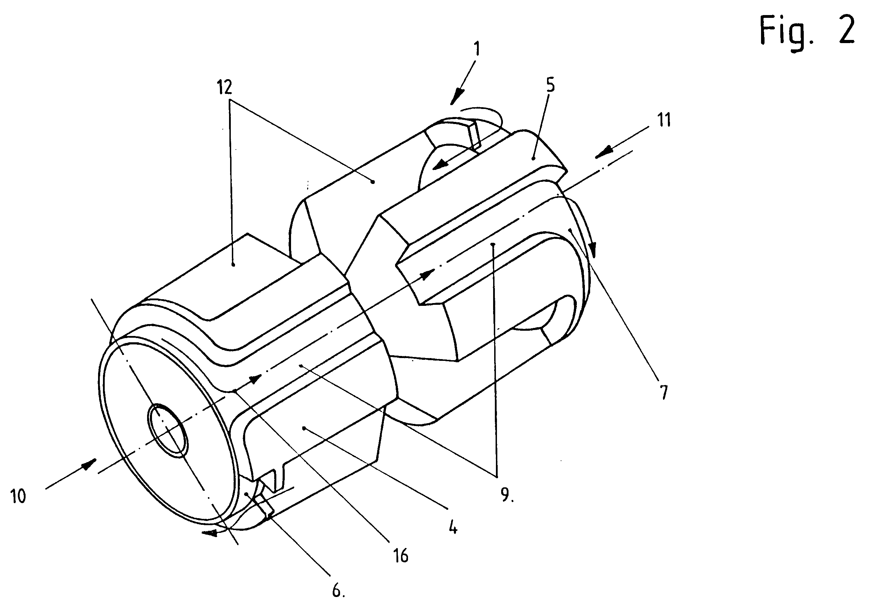

In Figur 1 ist ein auf eine innere Stützhülse 2 angeordneter Federkörper 1 aus Gummi dargestellt, der an seinen axialen Enden jeweils einen Ringkanal 6, 7 aufweist. Die Stege 4, 5 stützen sich im montierten Zustand der erfindungsgemäßen Gummibuchse 8 unter Vorspannung gegen die äußere Stützhülse 3 ab, die hier der besseren Übersichtlichkeit wegen als Einzelteil dargestellt ist. Bei der Montage der Gummibuchse 8 ist selbstverständlich auf eine einwandfreie Abdichtung der Dämpfungsflüssigkeit nach außen zu achten. Die Figuren 2 bis 9 zeigen einen Federkörper 1 aus Gummi in verschiedenen Ausführungen. Dieser Federkörper 1 ist im montierten Zustand zwischen zwei Stützhülsen 2, 3 angeordnet. Die Dämpfungswirkung der erfindungsgemäßen, hydraulisch dämpfenden Gummibuchse 8 beruht auf der Verschiebung der Flüssigkeitsmassen zwischen den Kammern innerhalb der Buchse.

Figur 2 zeigt den Federkörper 1 der hydraulisch dämpfenden Gummibuchse ohne Ventile mit sehr langen Ringkanälen 6, 7, die jeweils gemäß Pfeil 16 in einen Axialkanal 9 übergehen. Durch die große Länge der Kanäle 6, 7 und den vergleichsweise großen Querschnitt, sind Schwingungen mit niedrigen Frequenzen gut zu dämpfen. Jedoch bewirkt diese Ausführungsform eine relativ schmalbandige Dämpfung. Eine breitbandigere Dämpfung ermöglichen die in den folgenden Figuren beschriebenen Ausführungsbeispiele durch die Verwendung von Ventilen.

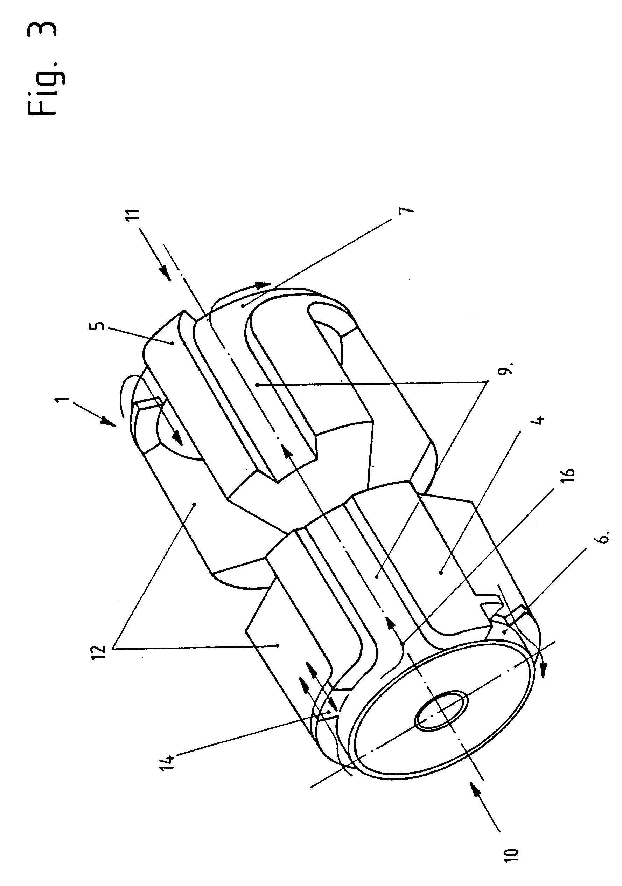

Figur 3 zeigt den Federkörper 1 der hydraulisch dämpfenden Gummibuchse mit einem Ventil 14, das vorzugsweise einseitig wirkend in der Trennwand zwischen dem Ringkanal 6 und der Arbeitskammer 12 angeordnet ist. Das Ventil 14 bewirkt eine breitbandigere Dämpfung auftretender Schwingungen.

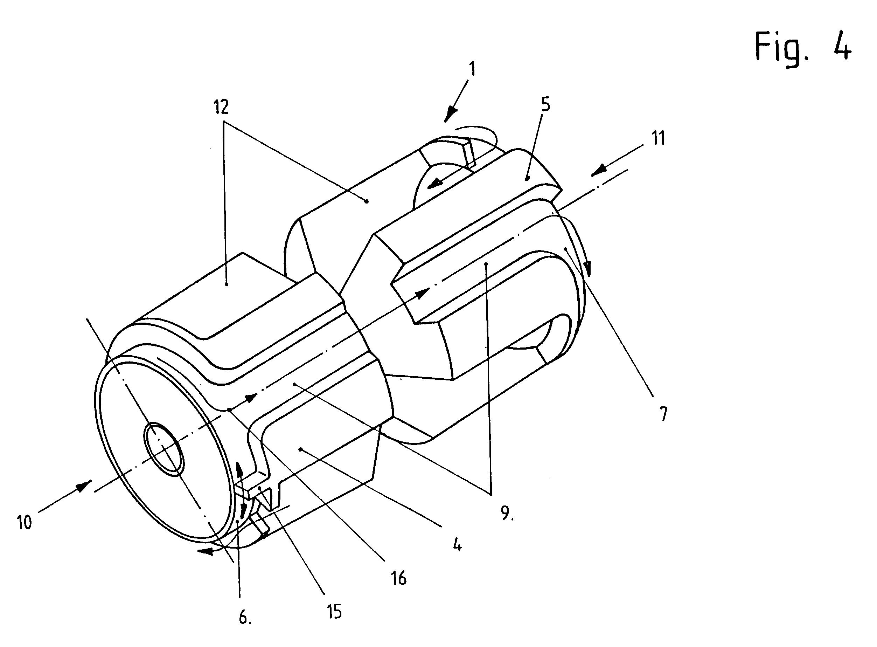

Figur 4 stellt eine alternative Ausführungsform zu Figur 3 dar, bei der das eingesetzte Ventil 15 symmetrisch in beide Richtungen wirkt. Zug- und Druckstufe weisen hier die gleiche Dämpfungscharakteristik auf.

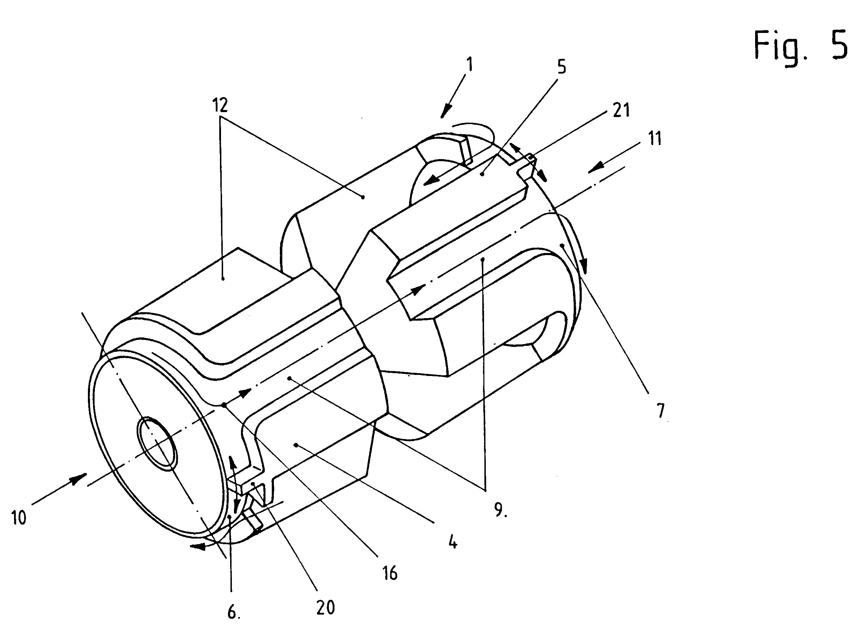

In Figur 5 ist der Federkörper 1 der hydraulisch dämpfenden Gummibuchse mit zwei symmetrisch wirkenden Ventilen 20, 21 ausgestattet, die auf jeweils einer Stirnseite 10, 11 angeordnet sind. Diese Buchse wird zur Dämpfung höherer Frequenzen eingesetzt. Außerdem ergibt sich durch die Anordnung des zweiten Ventils 21 ein breitbandigerer Dämpfungsbereich als bei Verwendung der in Figur 4 beschriebenen Gummibuchse.

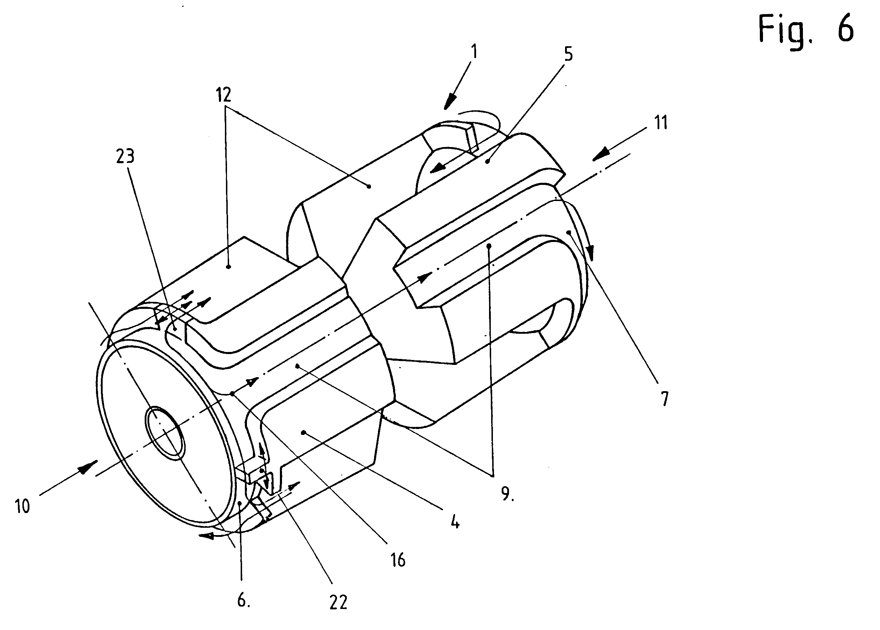

Figur 6 zeigt ebenfalls den Federkörper 1 der hydraulisch dämpfenden Gummibuchse mit zwei symmetrisch wirkenden Ventilen 22, 23, die allerdings nur einer Stirnseite 10 zugeordnet sind. Durch diese Anordnung der Ventile 22, 23 ist eine variable Dämpfung auftretender Schwingungen durch unterschiedlich lange Strömwege möglich. Der kurze Strömweg von Ringkanal 6 durch Ventil 22 in die Arbeitskammer 12 dämpft höherfrequente Schwingungen, während der lange Strömweg Schwingungen niedriger Frequenz dämpft. Diese Ventilanordnung erlaubt ein Umschalten der hydraulisch dämpfenden Gummibuchse den jeweiligen Erfordernissen entsprechend.

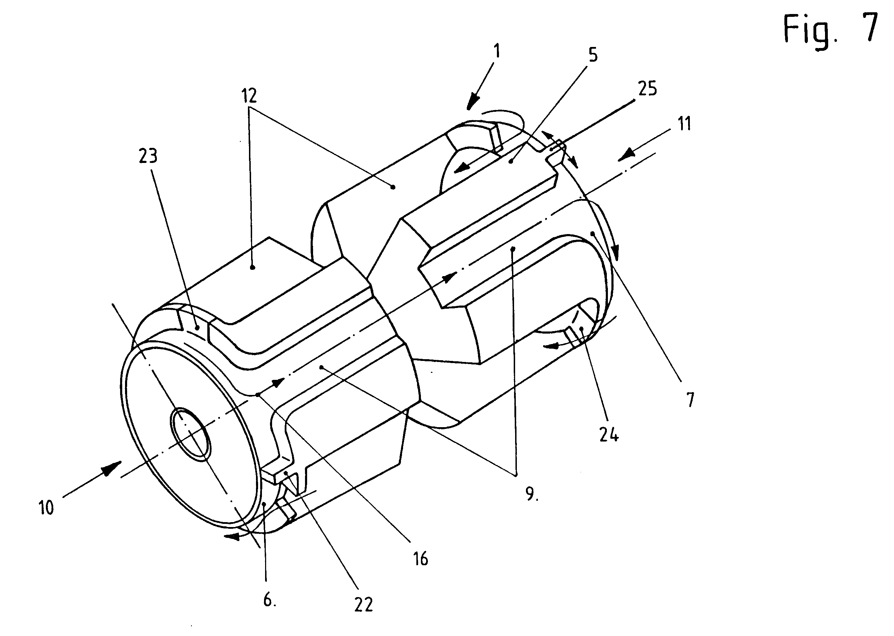

In Figur 7 kann die in Figur 6 beschriebene Wirkung durch die Anordnung der Ventile 24, 25 auf der gegenüberliegenden Stirnseite 11 gesteigert werden. Das Frequenzband der Schwingungen, die gedämpft werden können, ist nun am größten.

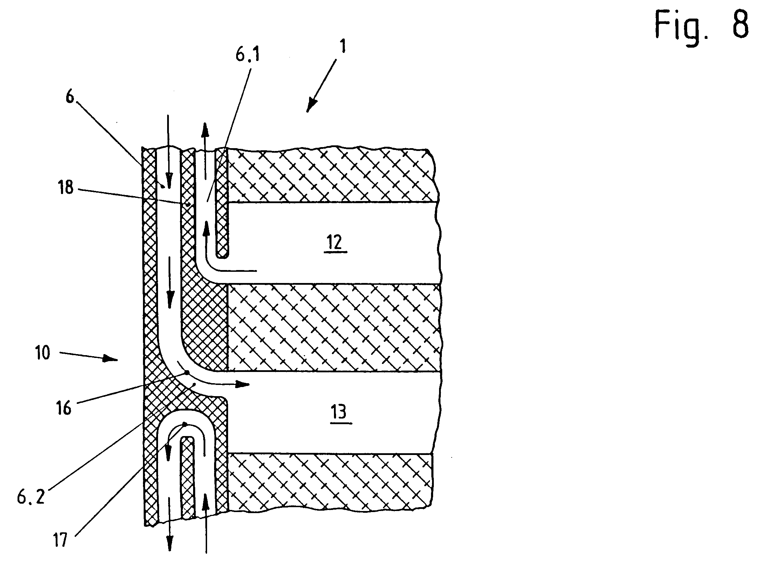

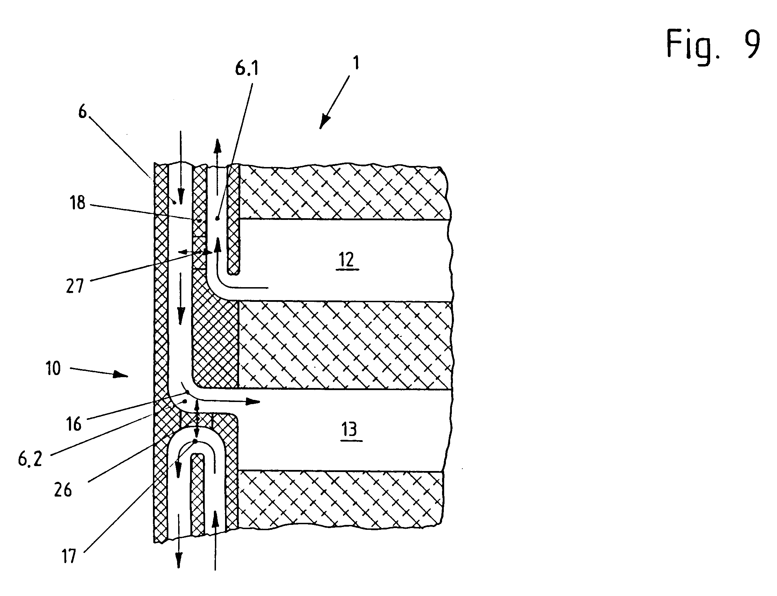

Die in den Figuren 8 und 9 gezeigte hydraulisch dämpfende Gummibuchse ist vom Schutzumfang der Erfindung gemäß Anspruch 1 nicht erfaßt.

Figur 8 zeigt einen Ausschnitt aus einer Abwicklung einer hydraulisch dämpfenden Gummibuchse. Zu erkennen sind die beiden Arbeitskammern 12 und 13, wobei die Arbeitskammer 13 in den Figuren 1 bis 7 aufgrund ihrer Lage verdeckt und daher nicht zu sehen war. Die Arbeitskammern 12 und 13 werden in axialer Richtung durchströmt und stehen mit dem Ringkanal, der sich aus den kanalartigen Abschnitten 6.1 und 6.2 zusammensetzt, in Verbindung. Dabei sind allerdings noch keine Ventile vorgesehen, so daß die Wirkungsweise der Beschreibung von Figur 2 entnommen werden kann.

Figur 9 zeigt eine weitergebildete Ausführung des Federkörpers bezüglich Figur 8. In den Trennwänden des Ringkanals 6 und/oder des Fortsatzes 18 sind zwei beidseitig wirkende Ventile 26, 27 angeordnet, die eine variable Dämpfungscharakteristik ermöglichen. Die Wirkungsweise entspricht den Ausführungen, die in den Figuren 6 und 7 bereits erläutert wurden. Die Anordnung der Ventile 26, 27 in der hier dargestellten Weise hat sich als besonders vorteilhaft erwiesen, jedoch sind auch andere Anordnungen möglich.

## Patentansprüche

1. Hydraulisch dämpfende Gummibuchse (8), die überwiegend senkrecht zu ihrer Achsrichtung belastbar ist, umfassend zwei einander in achsparalleler Zuordnung umschließende Stützhülsen (2, 3) mit einem dazwischen angeordneten Federkörper (1) aus Gummi, der die äußere Stützhülse (3) mit wenigstens zwei, im wesentlichen in radialer Richtung vorspringenden, auf ihren radial nach außen weisenden Flächen Metallauflagen tragenden, axial verlaufenden Stegen (4, 5) berührt, wobei die Stege (4, 5) gemeinsam mit stirnseitigen Abschlußwänden des Federkörpers (1) und der äußeren Stützhülse (3) flüssigkeitsgefüllte, durch Verbindungsöffnungen miteinander verbundene Kammern (12, 13) begrenzen und zwischen den beiden Stützhülsen (2, 3) auf ein die herstellungsbedingte Erstreckung unterschreitendes Maß elastisch zusammengestaucht sind, wobei ferner die Stege (4, 5) im Bereich der stirnseitigen Abschlußwände axial außenseitig an metallischen Stirnringen mit einem sich in Umfangsrichtung erstreckenden ringförmigen Randbereich festgelegt sind, welche gemeinsam mit der äußeren Stützhülse (3) Ringkanäle (6, 7) nach außen begrenzen, die Bestandteil der Verbindungsöffnungen sind, und wobei die beiden jeweils stirnseitigen, am Umfang des Federkörpers (1) verlaufenden Ringkanäle (6, 7) in je einer Arbeitskammer (12, 13) des Federkörpers (1) flüssigkeitsleitend enden, dadurch gekennzeichnet, daß die Ringkanäle (6, 7) durch einen im wesentlichen parallel zur Längsachse des Federkörpers (1) verlaufenden Axialkanal (9) flüssigkeitsleitend miteinander verbunden sind, der jeweils stirnseitig in die Ringkanäle (6, 7) von der axialen in die radiale Richtung umlenkend einmündet und durch die zwischen den Kammern (12, 13) radiale Trennwände darstellenden Stege (4, 5) des Federkörpers (1) und durch die äußere Stützhülse (3) in Umfangsrichtung nach außen und radial nach außen begrenzt ist.

2. Hydraulisch dämpfende Gummibuchse nach Anspruch 1, dadurch gekennzeichnet, daß sich an einer ihrer Stirnseiten (10, 11) in der Trennwand des radial verlaufenden Teilabschnittes des Ringkanals zur benachbarten Arbeitskammer (12), ein in Richtung dieser Arbeitskammer (12) zu öffnendes Ventil (14) befindet.

3. Hydraulisch dämpfende Gummibuchse nach Anspruch 1, dadurch gekennzeichnet, daß sich an einer ihrer Stirnseiten (10, 11), innerhalb des radial verlaufenden Ringkanals (6), ein in beide Durchflußrichtungen zu öffnendes Ventil (15) befindet.

4. Hydraulisch dämpfende Gummibuchse nach Anspruch 1, dadurch gekennzeichnet, daß sich an ihren beiden Stirnseiten (10, 11), innerhalb jedes Ringkanals (6, 7), je ein in beide Durchflußrichtungen zu öffnendes Ventil (20, 21) befindet.

5. Hydraulisch dämpfende Gummibuchse nach Anspruch 1, dadurch gekennzeichnet, daß sich an einer ihrer Stirnseiten (10) sowohl in der Trennwand des radial verlaufenden Teilabschnittes des Ringkanals (6) zur benachbarten Arbeitskammer (12) ein in Richtung dieser Arbeitskammer (12) zu öffnendes Ventil (23) als auch innerhalb des radial verlaufenden Ringkanals (6) ein in beide Durchflußrichtungen zu öffnendes Ventil (22) befindet.

6. Hydraulisch dämpfende Gummibuchse nach Anspruch 5, dadurch gekennzeichnet, daß beide Stirnseiten (10, 11) die gleiche Art von Ventilen in gleicher Zahl und Anordnung aufweisen.

7. Hydraulisch dämpfende Gummibuchse nach Anspruch 1, dadurch gekennzeichnet, daß die mit den Arbeitskammern verbundenen Ringkanäle durch jeweils zwei, parallel in Umfangsrichtung der Buchse verlaufende, kanalartige Abschnitte gebildet sind, die miteinander durch jeweils um 180° umlenkende Flüssigkeitskrümmer verbunden sind, wobei die parallelen, kanalartigen Abschnitte voneinander durch im wesentlichen in Umfangsrichtung verlaufende Fortsätze des Gummifederkörpers getrennt sind.

8. Hydraulisch dämpfende Gummibuchse nach Anspruch 7, dadurch gekennzeichnet, daß die parallelen, kanalartigen Abschnitte im Bereich der beiden Arbeitskammern je ein Ventil aufweisen, welches jeweils den Flüssigkeitsdurchtritt aus beiden Abschnitten zugleich in eine der Arbeitskammern regelt.

## Claims

1. A hydraulically damping rubber bush (8) which can be loaded mainly perpendicularly to its axial direction, comprising two support sleeves (2, 3), which surround one another in an axially parallel correlation, with, arranged between them, a spring body (1) made of rubber which touches the outer support sleeve (3) with at least two axially running ribs (4, 5) which project essentially in the radial direction and bear metal coatings on their radially outwardly facing surfaces, the ribs (4, 5) together with end-face terminating walls of the spring body (1) and the outer support sleeve (3) delimiting liquid-filled chambers (12, 13) interconnected by connecting openings and, between the two support sleeves (2, 3), being elastically compressed and thickened to a degree falling below the manufacture-dependent extent, the ribs (4, 5) also, in the region of the end-face terminating walls, being fixed axially externally to metallic end rings with an annular end region extending in the circumferential direction, which rings together with the outer support sleeve (3) outwardly delimit annular ducts (6, 7) which are a component of the connecting openings, and the two end-face annular ducts (6, 7) which run on the circumference of the spring body (1) each ending in a liquid-conducting manner in a working chamber (12, 13) of the spring body (1), characterised in that the annular ducts (6, 7) are interconnected in a liquid-conducting manner by an axial duct (9) which runs essentially parallel to the longitudinal axis of the spring body (1), opens in each case on the end face, deviating from the axial into the radial direction, into the annular ducts (6, 7) and is delimited outwardly in the circumferential direction and radially outwardly by the ribs (4, 5) of the spring body (1), which constitute radial partitions between the chambers (12, 13), and by the outer support sleeve (3).

2. A hydraulically damping rubber bush according to claim 1, characterised in that, on one of its end faces (10, 11) in the partition of the radially running part section of the annular duct to the adjacent working chamber (12), a valve (14) which is to be opened in the direction of this working chamber (12) is situated.

3. A hydraulically damping rubber bush according to claim 1, characterised in that, on one of its end faces (10, 11), a valve (15) which is to be opened in both flow-through directions is situated inside the radially running annular duct (6).

4. A hydraulically damping rubber bush according to claim 1, characterised in that, on both its end-faces (10, 11), a valve (20, 21) which in each case is to be opened in both flow-through directions is situated inside each annular duct (6,7).

5. A hydraulically damping rubber bush according to claim 1, characterised in that, on one of its end-faces (10), there is not only situated in the partition of the radially running part section of the annular duct (6) to the adjacent working chamber (12) a valve (23) which is to be opened in the direction of this working chamber (12) but there is also situated inside the radially running annular duct (6) a valve (22) which is to be opened in both flow-through directions.

6. A hydraulically damping rubber bush according to claim 5, characterised in that both end-faces (10, 11) have the same type of valves in identical number and arrangement.

7. A hydraulically damping rubber bush according to claim 1, characterised in that the annular ducts connected to the working chambers are in each case formed by two duct-like sections which run parallel in the circumferential direction of the bush and are inter-connected by liquid bends which deviate in each case by 180°, the parallel, duct-like sections being separated from one another by extensions of the rubber spring body which run essentially in the circumferential direction.

8. A hydraulically damping rubber bush according to claim 7, characterised in that the parallel, duct-like sections each have, in the region of the two working chambers, a valve which in each case regulates the liquid throughput from both sections simultaneously into one of the working chambers.

## Revendications

1. Manchon élastique amorti hydrauliquement (8), qui peut être sollicité, principalement perpendiculairement à sa direction axiale et qui comporte deux fourreaux de soutien (2, 3), disposés l'un dans l'autre parallèlement à l'axe et entre lesquels est installé un corps formant ressort (1) constitué de caoutchouc et en contact avec le fourreau extérieur de soutien (3) par au moins deux nervures (4, 5), orientées axialement, faisant saillie dans l'essentiel dans une direction radiale et portant des appuis métalliques sur leurs surfaces dirigées radialement vers l'extérieur, les nervures (4, 5) délimitant, en coopération avec des parois frontales de fermeture du corps formant ressort (1) et avec le fourreau extérieur de soutien (3), des chambres (12, 13) remplies de liquide, reliées l'une avec l'autre par des orifices de liaison, lesdites nervures étant comprimées élastiquement entre les deux fourreaux de soutien (2, 3) jusqu'à une dimension inférieure à la dimension résultant de la fabrication, lesdites nervures (4, 5) étant en outre fixées, dans la zone des parois frontales de fermeture, axialement et extérieurement sur des anneaux frontaux métalliques comportant une zone de bordure de forme annulaire s'étendant dans une direction circonférencielle de manière à délimiter vers l'extérieur, en coopération avec le fourreau extérieur de soutien (3), des canaux annulaires (6, 7) qui font partie des orifices de liaison, et les deux canaux annulaires (6, 7) situés sur un côté frontal respectif et s'étendant sur le pourtour du corps formant ressort (1), débouchant chacun en canalisant du liquide dans une chambre de travail (12, 13) du corps formant ressort (1), manchon caractérisé en ce que les canaux annulaires (6, 7) sont reliés l'un avec l'autre, de façon à transmettre du liquide, par un canal axial (9) orienté sensiblement parallèlement à l'axe longitudinal du corps formant ressort (1) et qui débouche sur le côté frontal respectif dans les canaux annulaires (6, 7) en étant dévié de la direction axiale dans la direction radiale et qui est délimité, dans une direction circonfériencielle vers l'extérieur et radialement vers l'extérieur, par les nervures (4, 5) du corps formant ressort (1), représentant les parois radiales de séparation entre les chambres (12, 13), ainsi que par le fourreau extérieur de soutien (3).

2. Manchon élastique amorti hydrauliquement selon la revendication 1, caractérisé en ce qu'il est prévu, sur un de ses côtés frontaux (10, 11) et dans la paroi de séparation entre la partie, orientée radialement, du canal annulaire et la chambre de travail adjacente (12), une soupape (14) s'ouvrant en direction de cette chambre de travail (12).

3. Manchon élastique amorti hydrauliquement selon la revendication 1, caractérisé en ce qu'il est prévu, sur un de ses côtés frontaux (10, 11) et à l'intérieur du canal annulaire (6) orienté radialement, une soupape (15) s'ouvrant dans les deux sens d'écoulement.

4. Manchon élastique amorti hydrauliquement selon la revendication 1, caractérisé en ce qu'il est prévu, sur un de ses deux côtés frontaux (10, 11) et à l'intérieur de chaque canal annulaire (6, 7), une soupape respective (20, 21) s'ouvrant dans les deux sens d'écoulement.

5. Manchon élastique amorti hydrauliquement selon la revendication 1, caractérisé en ce qu'il est prévu sur un de ses côtés frontaux (10), d'une part dans la paroi de séparation entre la partie, orientée radialement, du canal annulaire (6) et la chambre de travail adjacente (12), une soupape (23) s'ouvrant en direction de cette chambre de travail (12) et d'autre part, à l'intérieur du canal annulaire (6) orienté radialement, une soupape (22) s'ouvrant dans les deux sens d'écoulement.

6. Manchon élastique amorti hydrauliquement selon la revendication 5, caractérisé en ce que les deux côtés frontaux (10, 11) comportent le même type de soupapes intervenant en nombre et disposition identiques.

7. Manchon élastique amorti hydrauliquement selon la revendication 1, caractérisé en ce que les canaux annulaires reliés aux chambres de travail sont constitués chacun par deux parties en forme de canal, orientées parallèlement dans une direction circonférencielle du manchon et qui sont reliées l'une avec l'autre par des coudes de passage de liquide produisant chacun une déviation de 180°, les parties parallèles en forme de canal étant séparées l'une de l'autre par des appendices du corps formant ressort qui sont orientés sensiblement dans une direction circonférencielle.

8. Manchon élastique amorti hydrauliquement selon la revendication 7, caractérisé en ce que les parties parallèles en forme de canal comportent, dans une zone des deux chambres de travail, une soupape qui règle respectivement le passage de liquide s'écoulant des deux parties en même temps dans une des chambres de travail.
